(19) Europäisches Patentamt / European Patent Office / Office européen des brevets

(11) **EP 2 247 182 B1**

(12) **EUROPEAN PATENT SPECIFICATION**

(45) Date of publication and mention
of the grant of the patent:
**19.04.2017 Bulletin 2017/16**

(21) Application number: **08871161.9**

(22) Date of filing: **02.12.2008**

(51) Int Cl.:
*A01N 43/80* (2006.01)          *A01N 47/12* (2006.01)
*A01N 25/02* (2006.01)

(86) International application number:
**PCT/US2008/085228**

(87) International publication number:
**WO 2009/091450 (23.07.2009 Gazette 2009/30)**

(54) **STABLE, LOW VOC, LOW VISCOUS BIOCIDAL FORMULATIONS AND METHOD OF MAKING SUCH FORMULATIONS**

STABILE DÜNNFLÜSSIGE BIOZIDE FORMULIERUNGEN MIT NIEDRIGEM VOC-GEHALT UND VERFAHREN ZUR HERSTELLUNG VON SOLCHEN FORMULIERUNGEN

COMPOSITIONS BIOCIDES STABLES, À FAIBLE TENEUR EN VOC (COMPOSÉS ORGANIQUES VOLATILES) ET À FAIBLE VISCOSITÉ ET LEUR PROCÉDÉ DE FABRICATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.01.2008 US 21932 P**

(43) Date of publication of application:
**10.11.2010 Bulletin 2010/45**

(73) Proprietor: **Dow Global Technologies LLC Midland, MI 48674 (US)**

(72) Inventors:
• **ANNIS, Ioana**
 **Mundelein, IL 60060 (US)**
• **TINETTI, Sheila, M.**
 **Vernon Hills, IL 60061 (US)**
• **SIANAWATI, Emerentiana**
 **Vernon Hills, IL 60061 (US)**
• **FOLEY, Paul**
 **Midland, MI 48642 (US)**
• **DEBRUHL, Suzanne**
 **Kenosha, WI 53179 (US)**
• **LENOIR, Pierre, M.**
 **ZH 8805 Richterswil (CH)**

(74) Representative: **Beck Greener**
 **Fulwood House**
 **12 Fulwood Place**
 **London WC1V 6HR (GB)**

(56) References cited:
**WO-A-97/24925          WO-A-2006/122345
WO-A-2008/013784        US-A- 4 188 376
US-A- 6 149 930         US-A1- 2003 087 764**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The invention relates to stable biocide formulations which contain at least one biocide and an alkyl polyglycol. The new formulations exhibit low volatile organic compounds ("VOCs"), and low viscosities at high active concentration.

Background of the Invention

Many industrial biocide formulations used today are formulated with organic solvents that are volatile organic compounds (VOCs). For example, organic solvents such as petroleum distillates, dimethyl sulfoxide (DMSO), glycol ethers, N-methyl pyrrolidone (NMP), and propylene glycol (PG), are commonly used to prepare commercially-available biocide formulations of 3-iodo-2-propynyl butyl carbamate (IPBC), octyl isothiazolinone (OIT), dichlorooctylisothiazolinone (DCOIT), 2-bromo-2-nitro-1,3-propanediol (bronopol), and 2,2-dibromo-3-nitrilopropionamide (DBNPA), all important biocides used in the treatment and preservation of paints and coatings, wood, and other industrial applications.
Volatile organic compounds contribute to air pollution when released into the environment and their use in paints and coatings, in particular, is becoming less desirable. Antimicrobial suppliers have responded in part by developing aqueous dispersions of poorly soluble biocides, and/or solutions of biocides in low-VOC solvents (e.g. polyethyleneglycol (PEG) and PEG/water). Aqueous dispersions of biocides, however, often suffer from stability problems, and it is also often difficult to effectively and uniformly disperse the biocide in the matrix undergoing treatment.
PEG-based biocide solutions provide reduced VOCs, but have higher viscosities which are disadvantageous for handling by the end-user. PEG-based formulations are also limited in terms of active biocide concentration due to the higher viscosity caused by the PEG.
WO 2008/013784 describes a stable, low VOC, low viscous biocidal formulations comprising the biocide 1, 2-benzisothiazolin-3-one (BIT) alone or in combination with bronopol together with the liquid carrier MPEG-350. There exists a need, therefore, for biocide solutions that are low-VOC and that can be formulated at high concentrations and with lower viscosities relative to equivalent PEG-based formulations.

SUMMARY OF THE INVENTION

The invention provides a biocide formulation comprising: an effective amount of a biocide selected from one or more of 1,2-dibromo-2,4-dicyanobutane, N-butyl-1,2-benzisothiazolin-3-one (butyl-BIT), ortho-phenyl phenol (OPP), 3-iodo-2-propynyl butyl carbamate (IPBC), octyl isothiazolinone (OIT), dichlorooctylisothiazolinone (DCOIT), chlorothalonil, ß tubulin inhibitors such as carbendazim and thiabendazole, diiodomethyl-p-tolylsulfone (DIMTS), triazine-based biocides such as terbutryn, cybutryn, and prometryn, dimethylurea-based biocides such as diuron, isoproturon, chlorotuloron, and fluometuron, azoles such as propiconazole, difenoconazole, cyproconazole, and tebuconazole, 2,2-dibromo-3-nitrilopropionamide (DBNPA), 2-(thiocyanomethylthio) benzothiazole (TCMTB), pyrithiones such as zinc pyrithione, 2-bromo-2-nitropropane-1,3-diol (bronopol), and 2,2-dibromo-3-nitrilopropionamide; together with an alkyl polyglycol liquid carrier of formula (I): R-O-$(AO)_n$-H, wherein R is methyl ; AO is an ethyleneoxide group, ; and n is the average number of repeating AO units such that the alkyl polyglycol liquid carrier has a molecular weight of 300 to 400.
Other exemplary embodiments and advantages of the invention may be ascertained by reviewing the present disclosure.

BRIEF DESCRIPTION OF THE DRAWING

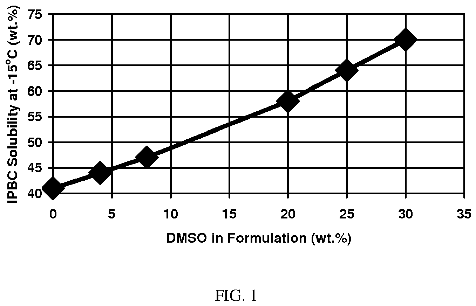

Fig. 1 depicts the phase boundary derived from a three component phase diagram for an exemplary embodiment of the invention.

DETAILED DESCRIPTION OF THE INVENTION

The invention provides a formulation for a biocide in a liquid carrier. The formulation is chemically stable, with low viscosity, and low VOC. In one embodiment, the invention provides a biocide formulation with the alkyl polyglycol of a molecular weight (MW) of 300 to 400. The present formulation overcomes the shortcomings of prior art systems. It is discovered that by using the alkyl polyglycol based liquid carriers of the invention, a biocide formulation of lower viscosity, high active concentration, and low VOCs can be prepared.
The biocide formulations of the invention are advantageous in protecting against microbial growth in a variety of industrial applications, and particularly those utilizing aqueous based systems. For example, the formulations are advantageous for protecting against microbial growth in applications such as latexes, paint formulations, coatings, mineral slurries, cosmetics, household or personal care formulations, metal working fluids, pulp and paper mill samples, wood, leather, building materials, and industrial water treatment.

It is also discovered that some embodiments of biocide formulations of the inventions are capable of lowering the film formation temperature of latex-based coatings. This feature is advantageous because it can improve the ability of a coating to be applied at lower temperature and/or enable a further reduction in the amount of plasticizers used in the coating.

The invention utilizes alkyl polyglycols of formula $R-O-(AO)_n-H$ as effective liquid carriers to provide biocide formulations with low viscosity and low VOC. In this formula, n is the average number of repeating AO units such that the alkyl polyglcol liquid carrier has a molecular weight of 300 to 400, R is a methyl group and AO is an ethylenenoxide group. The presence of R in the liquid carrier of formula (I) as a short alkyl group reduces the viscosity of the biocide formulations as compared to analogous formulations in PEG (polyethylene glycol). Without wishing to be bound by any particular theory, it is believed that the lower viscosity may be due to a possible reduction of intermolecular H-bonds. The reduction of viscosity is accomplished without compromising the efficiency of the liquid carrier to solubilize the biocide. In contrast, when R is too large, such as $C_4$ or above, the degree of intermolecular H-bonding between the alkyl polyglycol molecules decreases further compared to smaller R. Therefore, when the amount of AO chain content in the alkyl polyglycol formula (I) is similar, alkyl polyglycols having short R alkyl groups ($C_1$-$C_3$) will have less volatile components than alkyl polyglycols having $C_4$ or higher alkyl chains. In one test, the VOC content of MPEG-350 (R is a $C_1$ alkyl) is measured at about 5.9 wt. % while the VOC of an alkyl polyglycol with R being $C_4$ alkyl is measured at about 25 wt. %. Because of this, alkyl polyglycols with a short R group ($C_1$-$C_3$) may contain less VOC and are probably less odorous.

The liquid carrier is $Me-O-(CH_2CH_2O)_n-H$, the compound having a molecular weight of about 300 to 400, more preferably about 350 (the latter being available from The Dow Chemical Company as Carbowax MPEG-350). The concentration of liquid carrier in the formulation is preferably between about 15 weight percent and 99 weight percent, more preferably about between about 30 and 90 weight percent, and even more preferably, about 40 and 70 weight percent, based on the total weight of the formulation.

In some preferred embodiments, the biocide used in the formulation of the invention is 3-iodo-2-propynyl butyl carbamate (IPBC), octyl isothiazolinone (OIT), dichlorooctylisothiazolinone (DCOIT), chlorothalonil, ß tubulin inhibitors such carbendazim and thiabendazole, diiodomethyl-p-tolylsulfone (DIMTS), triazine-based biocides such as terbutryn, cybutryn, and prometryn, dimethylurea-based biocides such as diuron, isoproturon, chlorotoluron, and fluometuron, azoles such as propiconazole, difenoconazole, cyproconazole, and tebuconazole, 2,2-dibromo-3-nitrilopropionamide (DBNPA), 2-(thiocyanomethylthio) benzothiazole (TCMTB), pyrithiones such as zinc pyrithione, 2-bromo-2-nitropropane-1,3-diol (bronopol), 2,2-dibromo-3-nitrilopropionamide, and mixtures of two or more thereof.

In a further preferred embodiment, the biocide is 3-iodo-2-propynyl butyl carbamate (IPBC).

In another preferred embodiment, the biocide is octyl isothiazolinone (OIT).

In still another preferred embodiment, the biocide is 2-bromo-2-nitropropane-1,3-diol (bronopol).

In yet another preferred embodiment, the biocide is 2,2-dibromo-3-nitrilopropionamide (DBNPA).

In a further preferred embodiment, the biocide is a mixture of 3-iodo-2-propynyl butyl carbamate (IPBC) and octyl isothiazolinone (OIT).

In a still preferred embodiment, the biocide is a mixture of 3-iodo-2-propynyl butyl carbamate (IPBC) and dichlorooctylisothiazolinone (DCOIT).

In another preferred embodiment, the biocide is a mixture 3-iodo-2-propynyl butyl carbamate (IPBC) and propiconazole.

In another embodiment, the biocide is a mixture of 3-iodo-2-propynyl butyl carbamate (IPBC), octyl isothiazolinone (OIT), and cybutryn.

In another embodiment, the biocide is a mixture of 3-iodo-2-propynyl butyl carbamate (IPBC), octyl isothiazolinone (OIT), and diiodomethyl-p-tolylsulfone (DIMTS).

In further preferred embodiments, the biocide is IPBC and mixtures thereof with carbendazim and/or diuron; OIT and mixtures thereof with DIMTS, carbendazim and/or diuron; DBNPA; and Bronopol.

Excluded from biocides of the invention is benzisothiazolin-3-one (BIT).

Preferably, the biocide is present at a concentration of at least 1 weight percent, more preferably at least 10 weight percent and further preferably at least 30 weight percent. The biocide concentration is preferably 70 weight percent or less, and more preferably 60 weight percent or less. In further embodiments, the biocide concentration is between about 1 and 70 weight percent, between about 10 and 60 weight percent, or between about 30 and 60 weight percent. The foregoing concentrations are based on the total weight of the formulation.

The biocide formulations provided by the invention are chemically stable, exhibit low viscosity, and low VOCs. In some preferred embodiments, the formulation comprises less than 30 wt. % of volatile organic compounds, preferably less than 15 wt. % of volatile organic compounds, and more preferably less than 7 wt. % of volatile organic compounds.

According to some preferred embodiments, the formulations of the invention contain one or more co-solvents. The co-solvents assist in the dissolution of the biocide in the liquid carrier. The use of co-solvents is particularly suitable for high actives formulations (for example, containing 30 to 70 weight percent of biocide). Suitable co-solvents include: water, dimethyl sulfoxide, NMP, petroleum distillates such as Aromatic 100, propylene glycol, dipropylene glycol, polyethylene glycol, dimethylacetamide (DMAC), dimethylformamide (DMF), tetramethylurea, cyclopentanone, cyclohexanone, triethylphosphate, methyl ethyl ketone (MEK), glycol ethers such as tripropylene glycol methyl ether, glycol ether acetates such as ethylene glycol monobutyl ether acetate, 2,2,4-trimethyl-1,3-pentanediol monoisobutyrate, alcohols, amines, and mixtures of two or more thereof. Preferred co-solvents are DMSO, DMAC, DMF, NMP, tetramethylurea, cyclopentanone, cyclohexanone, triethylphosphate, and MEK. Particularly preferred are DMSO, NMP, DMAC, DMF, and tetramethylurea. When used, the co-solvent is preferably present in an amount of less than about 60 weight percent, preferably between about 1 and 30 weight percent, and more preferably between about 1 and 15 weight percent, based on the total weight of the liquid carrier and co-solvent.

In a particularly preferred embodiment of a co-solvent containing formulation, the formulation comprises:

15 to 70 weight percent of liquid carrier for formula (I);
30 to 70 weight percent of biocide: and
1 to 30 weight percent of co-solvent.

In a further particularly preferred embodiment of a formulation containing a co-solvent, the liquid carrier is 16-20 weight percent, the biocide is 58-62 weight percent, and the co-solvent is 20-24 weight percent.

According to the invention, a method is also provided for making a formulation containing an effective amount of at least one biocide and an alkyl polyglycol liquid carrier of formula (I), the method comprising: adding the biocide to the alkyl polyglycol to form a mixture, and stirring the mixture of biocide and alkyl polyglycol. In one embodiment, the method also includes adding water, and/or a co-solvent to the mixture of biocide and alkyl polyglycol.

In addition, other additives can also be incorporated in the formulation to add special properties to the end use product applications such as better dispersing, UV and light stabilization, etc. Among these additives are: nonionic surfactants such asalkyl poly(ethylene oxide), copolymers of poly(ethylene oxide) and poly(propylene oxide), alkyl polyglucosides, fatty alcohols cocamide MEA, cocamide DEA, polysorbates; anionic surfactants based on sulfate, sulfonate and carboxylate anions such as alkyl sulphates, alkyl ethoxylate sulphates and fatty acid/soaps ; cationic surfactants based on quaternary ammonium cations such as alkylquats and esterquats; Zwitterionic (amphoteric) surfactants such as dodecyl betaine, dodecyl dimethylamine oxide, cocamidopropyl betaine, coco ampho glycinate); UV/ light stabilizer such as benzotriazole, triazine, benzophenone type and hindered amine, anti-oxidants such as: primary(hindered phenols and secondary aromatic amines), secondary (organophosphorus compounds and thiosynergist), multifunctional (hydroxyl amine, lactones and acrylated bis-phenol).

Additional biocides may also be included in the formulations of the invention.

As used in this specification, the term "volatile organic compound (VOC)" means the amount of organic carbons in the formulation which is volatile and is measured according to the EPA Method 24. Measurement of VOC consists of adding to a preweighed aluminum dish a small amount of formulation (about 0.5 grams) and about 3 grams of water. The dish is then placed in an oven equilibrated at 110°C $\pm$ 5ºC for one hour. The dish is then removed from the oven and placed in a dessicator to allow cooling to the room temperature. The dish is weighed again and the VOC content of the formulation can be determined.

Unless otherwise stated, all percentages are by weight based on the total weight of the formulation.

The invention can be further illustrated by the following examples and comparative studies:

EXAMPLES

Example 1: Viscosities of IPBC solutions in MPEG vs PEG

This example compares viscosities of formulations containing MPEG-350 according to the invention, with non-invention formulations containing PEG-400. Samples are prepared by weighing the required amount of IPBC and solvent, MPEG-350 or PEG-400, into a vial to achieve the desired weight fraction of IPBC in the liquid carrier. The IPBC / solvent mixture is warmed to 70 °C while shaking to accelerate the dissolution process. Once the IPBC is dissolved, the solution is cooled to room temperature for viscosity measurement.

A Brookfield Cap 2000+ viscometer equipped with spindle 10 is calibrated using a known standard. The spindle is charged with the IPBC solution to be measured and when the sample temperature is stable at 25 °C, the viscosity is measured with a spindle speed of 100 rpm and a shear rate of 500 sec-1. Data is provided in Table 1. In Table 1, formulations based on PEG-400 are for comparative purposes.

Table 1.

| % IPBC | Solvent | Brookfield Viscosity, cP Spindle #10, 100 rpm, 25 °C |
|---|---|---|
| 40% | PEG400 | 170.5 |
| 45% | PEG400 | 187.2 |
| 50% | PEG400 | 202.8 |
| 40% | MPEG350 | 72.4 |
| 45% | MPEG350 | 80.5 |
| 50% | MPEG350 | 92.4 |

As can be seen, MPEG-based solutions of IPBC can be formulated to higher concentrations and at lower viscosities relative to PEG-based solutions.

Examples 2-6

The biocidal solutions of Examples 2-6 are prepared according the general method outlined below:

In a 100 ml beaker is added about 25 ml of solvent, and the weight is recorded to four significant digits. The beaker is heated to 40-60°C (depending on the active being tested) in a water bath. The solute of interest is added stepwise (all aliquot weights are recorded to four significant digits) until saturation is achieved. Once the solid remains undissolved, back-titration with known weights of solvent are performed until the solution is clear.

Brookfield viscosity measurements are obtained at 23°C using the spindles and rpms noted in the tables below.

VOC measurements are made according to the following procedure: to an oven-dried, tared aluminum pan is added 0.5 g of the test solution, weighed to four decimal places. Approximately 3 g of water are added to the test solution. The pan is heated in a vented oven for 1 hour at 110°C $\pm$ 5ºC. After removal from the oven, the pan and its contents are allowed to cool in a dessicator. After equilibrating to room temperature, the pan is weighed. The VOC content is calculated according to the formula below:

$$\% \text{ VOC} = 100 \text{ x } (1 - (\text{final wt. pan} - \text{pan tare wt.})/\text{initial wt. of test formulation}) - \% \text{ water.}$$

Example 2: VOC/Viscosity of IPBC

The volatile organic content of formulations of IPBC in MPEG-350, PEG-400, NMP, are evaluated, as well as a commercial IPBC sample. Data are provided in Table 2. In Table 2, formulations based on PEG-400 or NMP are for comparative purposes.

Table 2.

| IPBC Formulation | VOC Levels, % by wt | Brookfield Viscosity, cP Spindle #4 @ 100 rpm, 23 °C |
|---|---|---|
| 47% IPBC in MPEG 350 | 6.8 | 108 |
| 40% IPBC in PEG 400 | 4.8 | 184 |
| 40% IPBC in NMP | 65.8 | 22 |
| 40% IPBC in MPEG 350 | 4.3 | 96 |
| Commercial sample of 40 % IPBC (Polyphase AF1) | 62.5 | NA |

As can be seen, MPEG enables the formulation of low VOC solutions of IPBC. As also demonstrated, IPBC can be formulated to a higher active concentration and lower viscosity in MPEG as compared to PEG.

Example 3: VOC/Viscosity of OIT

This example compares the VOC and viscosity of the biocide OIT in MPEG-350, according to the invention, against propylene glycol (PG), a non-invention formulation. Data is in Table 3.

Table 3.

| OIT Formulation | VOC Levels, % by wt | Brookfield Viscosity, cP Spindle #4 @ 100 rpm, 23 °C |
|---|---|---|
| 40% OIT in MPEG 350 | 5.9 | 54 |
| 40% OIT in PG | 64.6 | 58 |

As can be seen, MPEG enables the formulation of low VOC solutions of OIT. Viscosity, relative to propylene glycol (the solvent commonly used in commercial OIT formulations today), is also not adversely impacted by using MPEG.

Example 4: VOC/Viscosity of Bronopol

This example compares the VOC and viscosity of formulations of the biocide Bronopol in MPEG-350, according to the invention, against formulations in PG/water (comparitive formulation). Data are shown in Table 4.

Table 4.

| Bronopol Formulation | VOC Levels, % by wt | Brookfield Viscosity, cP Spindle #4 @ 100 rpm, 23 °C |
|---|---|---|
| 30% Bronopol in MPEG 350 | 4.8 | 114 |
| 30% Bronopol, 61% PG, 9% Water (BIOBAN BP 30) | 41.5 | 58 |

As can be seen, MPEG enables the formulation of low VOC solutions of Bronopol.

Example 5: Viscosity of DBNPA

This example compares the viscosity of a formulation of the biocide DBNPA in MPEG-350, according to the invention, against formulations in PEG (non-invention). Data are shown in Table 5.

Table 5.

| DBNPA Formulation | Brookfield Viscosity, cP Spindle #4 @ 100 rpm, 23 °C |
|---|---|
| 50% DBNPA in MPEG 350 | 398 |
| 50% DBNPA in PEG 400 | 1140 |

As can be seen, MPEG enables the formulation of a DBNPA solution at a very high active concentration, while maintaining a relatively low viscosity.

Example 6: IPBC Formulations Based on MPEG/DMSO versus PEG/DMSO

This example compares the viscosity and VOC content of 55 and 60% IPBC formulations in MPEG-350/DMSO and PEG-400/DMSO. For the 55% IPBC solutions, 10% DMSO is used. For the 60% solutions, only 10% DMSO is required for complete dissolution of the IPBC when MPEG is used, however, 15% DMSO is required for complete dissolution of the IPBC when PEG 400 is used. Viscosity and VOC data are in Table 6.

Table 6

| Sample | Brookfield Viscosity (cP), cone and plate setup, spindle #6 @ 800 rpm, 22 °C | VOC Levels, % by wt |
|---|---|---|
| 55%IPBC,10%DMSO,35%PEG400 | 158.8 | 15.9 |
| 55%IPBC,10%DMSO,35%MPEG 350 | 84.4 | 15.1 |
| 60%IPBC,15%DMSO,25%PEG400 | 125.1 | 20.2 |

(continued)

| Sample | Brookfield Viscosity (cP), cone and plate setup, spindle #6 @ 800 rpm, 22 °C | VOC Levels, % by wt |
|---|---|---|
| 60%IPBC,10%DMSO,30%MPEG 350 | 97.3 | 16.6 |

As can be seen from the data, MPEG/DMSO enables the formulation of solutions with lower viscosity relative to PEG400/DMSO solutions, and in the case of 60% IPBC, at lower VOC as well.

Example 7: Low Temperature (-15 °C) Solubility of IPBC With and Without DMSO

The impact of low temperature on solubility of IPBC in MPEG, with and without DMSO, is assessed. Low temperature solubility is important in certain circumstances such as transportation and storage of solutions in cold temperatures. For the Example, a large number of IPBC, MPEG-350, and DMSO compositions are prepared where the mixtures are stable one phase liquid mixtures at room temperature. These mixtures are cooled to -15°C, in a freezer and seeded with a trace of solid IPBC crystals. Mixtures that are supersaturated in IPBC at -15°C show precipitation, crystal growth, of IPBC within 24h on being held at -15°C. Mixtures that are stable single phase compositions at -15°C show no IPBC precipitation on sitting for greater than 24h at -15°C. From the large number of different three component mixtures evaluated, a three component phase diagram shows the compositional boundary where a stable single phase composition region is adjacent to a two phase, solid IPBC and liquid, phase region at -15°C . Stable single phase compositions near the phase boundary, at -15°C, are depicted in the graph of Fig. 1. Since these are three component mixtures, by knowing the quantity of two components, the quantity of the third component can be calculated using the equation: 100% = %IPBC + %DMSO + %MPEG-350. As can be seen, a low-temperature stable 60% IPBC solution with a VOC content of <30% can be obtained using 18% MPEG and 22% DMSO.

Example 8: Viscosity and VOC of two to three biocides blends

The volatile organic content and viscosity of various IPBC blends in MPEG-350 are provided in Table 8. This example shows that MPEG-350 also enables the making of various biocides blends at high active concentrations, low VOC, and low viscosity.

Table 8.

| Biocides blends in MPEG 350 (weight ratio) | Total active (%) | Brookfield Viscosity Spindle #4, 100 rpm at 22°C, | VOC (%) |
|---|---|---|---|
| | | cp | |
| 4IPBC:1OIT (4:1) | 40 | 88 | 4.60 ± 0.20 |
| IPBC:OIT:DIMTS (6.9:1:1) | 40 | 96 | 6.51 ± 0.70 |
| IPBC:OIT:cybutryn (6.9:1:1) | 40 | 94 | 7.36 ± 0.12 |
| IPBC: propiconazole (1:1) | 50 | 154 | 4.47 ± 0.29 |

Example 9: Effect of the Inventive Formulations on the Minimum Film Formation Temperature of an Acrylic Latex

Minimum film formation temperature is performed with a custom-built MFFT bar (Current Enterprises, Inc.). Unlike the apparatus described in ASTM. D 2354-98, the heating and cooling elements installed under the length of the bar create a continuous temperature gradient from 0° to 60°C. The temperature range described in ASTM is from 0° to 25°C. This apparatus also has temperature probes across the bar which allows monitoring to be performed manually. A cover over the bar is mounted to enable a flow of dry nitrogen and avoid temperature fluctuation. Films of latex samples containing 1 to 2% formulation of 40%IPBC in MPEG 350 and none are cast from the high-temperature to the low-temperature end of the bar with a 3-mil clearance applicator (vs. 6-mil specified in ASTM. D 2354). After drying, each track of film is inspected to locate the border between continuous, solid film and the region of cracked film. The MFFT is determined and measured at the beginning of the region where the film cracks.

As shown in Table 9, the incorporation of a 40% IPBC/MPEG 350 formulation in a low VOC acrylic latex (Acronal Optive 230 from BASF) lowers the minimum film forming temperature (MFFT) of the latex coating. Consequently, biocides formulated in the liquid carriers of the invention can improve the ability of a coating to be applied at lower temperature, and also enable a reduction in the amount of internal plasticizer used in a coating formulation.

Table 9

| The Effect a 40% IPBC/MPEG on the MFFT of an Acrylic Latex | | |
|---|---|---|
| Latex | Formulated 40% IPBC in MPEG 350 wt% | MFFT ($^{o}$C) |
| Acronal Optive 230 | 0.0 | 7.7 |
| Acronal Optive 230 | 1.0 | 5.8 |
| Acronal Optive 230 | 1.5 | 4.6 |
| Acronal Optive 230 | 2.0 | 2.6 |

**Claims**

1. A formulation comprising:

   an effective amount of a biocide selected from one or more of 1,2-dibromo-2,4-dicyanobutane, N-butyl-1,2-benzisothiazolin-3-one (butyl-BIT), ortho-phenyl phenol (OPP), 3-iodo-2-propynyl butyl carbamate (IPBC), octyl isothiazolinone (OIT), dichlorooctylisothiazolinone (DCOIT), chlorothalonil, ß tubulin inhibitors such carbendazim and thiabendazole, diiodomethyl-p-tolylsulfone (DIMTS), triazine-based biocides such as terbutryn, cybutryn, and prometryn, dimethylurea-based biocides such as diuron, isoproturon, chlorotoluron, and fluometuron, azoles such as propiconazole, difenoconazole, cyproconazole, and tebuconazole, 2,2-dibromo-3-nitrilopropionamide (DBNPA), 2-(thiocyanomethylthio) benzothiazole (TCMTB), pyrithiones such as zinc pyrithione, 2-bromo-2-nitropropane-1,3-diol (bronopol), and 2,2-dibromo-3-nitrilopropionamide; and
   an alkyl polyglycol liquid carrier of formula (I):

   $$R\text{-}O\text{-}(AO)_n\text{-}H$$

   wherein R is methyl;
   AO is an ethyleneoxide group; and
   n is the average number of repeating AO units such that the alkyl polyglycol liquid carrier has a molecular weight of 300 to 400

   but not including a formulation having 9 wt% 2-bromo-2-nitropropane-1,3-diol (bronopol), 9 wt% 1,2-benzisothiazolin-3-one (BIT), 1 wt% D,L-lactic acid, 78 wt% MPEG-350 and 3 wt% water.

2. A formulation according to claim 1 further comprising a co-solvent.

3. A formulation according to claim 2 wherein the co-solvent is selected from the group consisting of: water, dimethyl sulfoxide, NMP, petroleum distillates, propylene glycol, dipropylene glycol, polyethylene glycol, dimethylacetamide (DMAC), dimethylformamide (DMF), tetramethylurea, cyclopentanone, cyclohexanone, triethylphosphate, methyl ethyl ketone (MEK), glycol ethers, glycol ether acetates, 2,2,4-trimethyl-1,3-pentanediol monoisobutyrate, alcohols, amines, and mixtures of two or more thereof.

4. A formulation according to claims 1-3 comprising:

   15 to 99 weight percent of liquid carrier of formula (I);
   1 to 70 weight percent of biocide; and
   0 to 30 weight percent of co-solvent.

5. A formulation according to claims 1-4 comprising less than 30 weight percent of volatile organic compounds.

6.  A formulation according to claims 1-5 wherein the biocide is selected from one or more of: 3-iodo-2-propynyl butyl carbamate (IPBC), octyl isothiazolinone (OIT), dichlorooctylisothiazolinone (DCOIT), chlorothalonil, ß tubulin inhibitors such carbendazim and thiabendazole, diiodomethyl-p-tolylsulfone (DIMTS), triazine-based biocides such as terbutryn, cybutryn, and prometryn, dimethylurea-based biocides such as diuron, isoproturon, chlorotoluron, and fluometuron, azoles such as propiconazole, difenoconazole, cyproconazole, and tebuconazole, 2,2-dibromo-3-nitrilopropionamide (DBNPA), 2-(thiocyanomethylthio) benzothiazole (TCMTB), pyrithiones such as zinc pyrithione, 2-bromo-2-nitropropane-1,3-diol (bronopol), and 2,2-dibromo-3-nitrilopropionamide.

7.  A formulation according to claims 1-5 wherein the biocide is 3-iodo-2-propynyl butyl carbamate (IPBC), octyl isothiazolinone (OIT), 2-bromo-2-nitropropane-1,3-diol (bronopol), or 2,2-dibromo-3-nitrilopropionamide (DBNPA).

8.  A formulation according to claims 1-5 wherein the biocide is a mixture of 3-iodo-2-propynyl butyl carbamate (IPBC) together with one or more of: octyl isothiazolinone (OIT), dichlorooctylisothiazolinone (DCOIT), propiconazole, cybutryn, or diiodomethyl-p-tolylsulfone (DIMTS).

9.  A method of making the formulation of claims 1-8, the method comprising:

    adding the biocide to the alkyl polyglycol to form a mixture, and
    stirring the mixture of biocide and alkyl polyglycol.

10. A method of inhibiting the growth of microorganisms in an aqueous-based system, the method comprising adding to said system an effective amount of a formulation according to any one of claims 1-8.

11. A method according to claim 10 wherein the aqueous based system is or is used with systems selected from latexes, paint formulations, coatings, mineral slurries, cosmetics, household or personal care formulations, metal working fluids, pulp and paper mill samples, wood, leather, building materials, and industrial water treatment.

## Patentansprüche

1.  Eine Formulierung, die Folgendes beinhaltet:

    eine wirksame Menge eines Biozids, ausgewählt aus einem oder mehreren von 1,2-Dibrom-2,4-dicyanobutan, N-Butyl-1,2-benzisothiazolin-3-on (Butyl-BIT), Orthophenylphenol (OPP), 3-Iod-2-propinylbutylcarbamat (IPBC), Octylisothiazolinon (OIT), Dichloroctylisothiazolinon (DCOIT), Chlorthalonil, $\beta$-Tubulin-Inhibitoren wie etwa Carbendazim und Thiabendazol, Diiodmethyl-p-tolylsulfon (DIMTS), Bioziden auf Triazinbasis wie etwa Terbutryn, Cybutryn und Prometryn, Bioziden auf Dimethylharnstoffbasis wie Diuron, Isoproturon, Chlortoluron und Fluometuron, Azolen wie etwa Propiconazol, Difenoconazol, Cyproconazol und Tebuconazol, 2,2-Dibrom-3-nitrilopropionamid (DBNPA), 2-(Thiocyanomethylthio)benzothiazol (TCMTB), Pyrithionen wie etwa Zinkpyrithion, 2-Brom-2-nitropropan-1,3-diol (Bronopol) und 2,2-Dibrom-3-nitrilopropionamid; und
    einen flüssigen Alkylpolyglycol-Träger der Formel (I):

    $$R\text{-}O\text{-}(AO)_n\text{-}H$$

    wobei R Methyl ist;
    AO eine Ethylenoxidgruppe ist; und
    n die durchschnittliche Anzahl sich wiederholender AO-Einheiten ist, so dass der flüssige Alkylpolyglycol-Träger ein Molekulargewicht von 300 bis 400 aufweist, jedoch keine Formulierung mit 9 Gew.-% 2-Brom-2-nitropropan-1,3-diol (Bronopol), 9 Gew.-% 1,2-Benzisothiazolin-3-on (BIT), 1 Gew.-% D,L-Milchsäure, 78 Gew.-% MPEG-350 und 3 Gew.-% Wasser umfasst.

2.  Formulierung gemäß Anspruch 1, die ferner ein Hilfslösemittel beinhaltet.

3.  Formulierung gemäß Anspruch 2, wobei das Hilfslösemittel ausgewählt ist aus der Gruppe, bestehend aus Folgendem: Wasser, Dimethylsulfoxid, NMP, Petroleumdestillaten, Propylenglycol, Dipropylenglycol, Polyethylenglycol, Dimethylacetamid (DMAC), Dimethylformamid (DMF), Tetramethylharnstoff, Cyclopentanon, Cyclohexanon, Triethylphosphat, Methylethylketon (MEK), Glycolethern, Glycoletheracetaten, 2,2,4-Trimethyl-1,3-pentandiolmonoisobutyrat, Alkoholen, Aminen und Mischungen von zwei oder mehr davon.

4. Formulierung gemäß einem der Ansprüche 1-3, die Folgendes beinhaltet:

zu 15 bis 99 Gewichtsprozent flüssigen Träger von Formel (I);
zu 1 bis 70 Gewichtsprozent Biozid; und
zu 0 bis 30 Gewichtsprozent Hilfslösemittel.

5. Formulierung gemäß einem der Ansprüche 1-4, die weniger als 30 Gewichtsprozent flüchtige organische Verbindungen beinhaltet.

6. Formulierung gemäß einem der Ansprüche 1-5, wobei das Biozid aus einem oder mehreren von Folgendem ausgewählt ist: 3-Iod-2-propinylbutylcarbamat (IPBC), Octylisothiazolinon (OIT), Dichloroctylisothiazolinon (DCOIT), Chlorthalonil, β-Tubulin-Inhibitoren wie etwa Carbendazim und Thiabendazol, Düodmethyl-p-tolylsulfon (DIMTS), Bioziden auf Triazinbasis wie etwa Terbutryn, Cybutryn und Prometryn, Bioziden auf Dimethylharnstoffbasis wie etwa Diuron, Isoproturon, Chlortoluron und Fluometuron, Azolen wie etwa Propiconazol, Difenoconazol, Cyproconazol und Tebuconazol, 2,2-Dibrom-3-nitrilopropionamid (DBNPA), 2-(Thiocyanomethylthio)benzothiazol (TCMTB), Pyrithionen wie etwa Zinkpyrithion, 2-Brom-2-nitropropan-1,3-diol (Bronopol) und 2,2-Dibrom-3-nitrilopropionamid.

7. Formulierung gemäß einem der Ansprüche 1-5, wobei es sich bei dem Biozid um 3-Iod-2-propinylbutylcarbamat (IPBC), Octylisothiazolinon (OIT), 2-Brom-2-nitropropan-1,3-diol (Bronopol) oder 2,2-Dibrom-3-nitrilopropionamid (DBNPA) handelt.

8. Formulierung gemäß einem der Ansprüche 1-5, wobei es sich bei dem Biozid um eine Mischung aus 3-Iod-2-propinylbutylcarbamat (IPBC), zusammen mit einem oder mehreren von Folgendem handelt: Octylisothiazolinon (OIT), Dichloroctylisothiazolinon (DCOIT), Propiconazol, Cybutryn oder Düodmethyl-p-tolylsulfon (DIMTS).

9. Ein Verfahren zum Herstellen der Formulierung gemäß einem der Ansprüche 1-8, wobei das Verfahren Folgendes beinhaltet:

Zugeben des Biozids zu dem Alkylpolyglycol, um eine Mischung zu bilden, und
Rühren der Mischung aus dem Biozid und dem Alkylpolyglycol.

10. Ein Verfahren zum Hemmen des Wachstums von Mikroorganismen in einem System auf Wasserbasis, wobei das Verfahren das Zugeben einer wirksamen Menge einer Formulierung gemäß einem der Ansprüche 1-8 zu dem System beinhaltet.

11. Verfahren gemäß Anspruch 10, wobei es sich bei dem System auf Wasserbasis um Systeme handelt oder wobei das System auf Wasserbasis mit Systemen verwendet wird, die ausgewählt sind aus Latizes, Lackformulierungen, Beschichtungen, Mineralaufschlämmungen, Kosmetika, Haushalts- oder Körperpflegeformulierungen, Metallbearbeitungsfluiden, Zellstoff- und Papiermühlenproben, Holz, Leder, Baustoffen und industrieller Wasseraufbereitung.

**Revendications**

1. Une formulation comprenant :

une quantité efficace d'un biocide sélectionné parmi un élément ou plus parmi le 1,2-dibromo-2,4-dicyanobutane, la N-butyl-1,2-benzisothiazolin-3-one (butyl-BIT), l'ortho-phénylphénol (OPP), le 3-iodo-2-propynyl butyl carbamate (IPBC), l'octylisothiazolinone (OIT), la dichlorooctylisothiazolinone (DCOIT), le chlorothalonil, des inhibiteurs de la tubuline β tels que la carbendazime et le thiabendazole, la düodométhyl-p-tolylsulfone (DIMTS), des biocides à base de triazine tels que la terbutryne, la cybutryne, et la prométryne, des biocides à base de diméthylurée tels que le diuron, l'isoproturon, le chlorotoluron, et le fluométuron, des azoles tels que le propiconazole, le difénoconazole, le cyproconazole, et le tébuconazole, le 2,2-dibromo-3-nitrilopropionamide (DBNPA), le 2-(thiocyanométhylthio) benzothiazole (TCMTB), des pyrithiones telles que la pyrithione de zinc, le 2-bromo-2-nitropropane-1,3-diol (bronopol), et le 2,2-dibromo-3-nitrilopropionamide ; et
un support liquide de polyglycol d'alkyle de formule (I) :

$$R-O-(AO)_n-H$$

dans laquelle R est un méthyle ;

AO est un groupe oxyde d'éthylène ; et

n est le nombre moyen d'unités AO se répétant de sorte que le support liquide de polyglycol d'alkyle a une masse moléculaire allant de 300 à 400 mais n'incluant pas une formulation ayant 9 % en poids de 2-bromo-2-nitropropane-1,3-diol (bronopol), 9 % en poids de 1,2-benzisothiazolin-3-one (BIT), 1 % en poids de D,L-acide lactique, 78 % en poids de MPEG-350 et 3 % en poids d'eau.

2. Une formulation selon la revendication 1 comprenant en outre un co-solvant.

3. Une formulation selon la revendication 2 dans laquelle le co-solvant est sélectionné dans le groupe consistant en : l'eau, le diméthylsulfoxyde, la NMP, des distillats de pétrole, le propylène glycol, le dipropylène glycol, le polyéthylène glycol, le diméthylacétamide (DMAC), le diméthylformamide (DMF), la tétraméthylurée, la cyclopentanone, la cyclohexanone, le triéthylphosphate, la méthyléthylcétone (MEC), des éthers de glycol, des acétates d'éther de glycol, le 2,2,4- triméthyl-1,3-pentanediol monoisobutyrate, des alcools, des amines, et des mélanges de deux ou plus de ceux-ci.

4. Une formulation selon les revendications 1 à 3 comprenant :

de 15 à 99 pour cent en poids de support liquide pour la formule (I) ;

de 1 à 70 pour cent en poids de biocide ; et

de 0 à 30 pour cent en poids de co-solvant.

5. Une formulation selon les revendications 1 à 4 comprenant moins de 30 pour cent en poids de composés organiques volatils.

6. Une formulation selon les revendications 1 à 5 dans laquelle le biocide est sélectionné parmi un élément ou plus parmi : le 3-iodo-2-propynyl butyl carbamate (IPBC), l'octylisothiazolinone (OIT), la dichlorooctylisothiazolinone (DCOIT), le chlorothalonil, des inhibiteurs de la tubuline β tels que la carbendazime et le thiabendazole, la diiodométhyl-p-tolylsulfone (DIMTS), des biocides à base de triazine tels que la terbutryne, la cybutryne, et la prométryne, des biocides à base de diméthylurée tels que le diuron, l'isoproturon, le chlorotoluron, et le fluométuron, des azoles tels que le propiconazole, le difénoconazole, le cyproconazole, et le tébuconazole, le 2,2-dibromo-3-nitrilopropionamide (DBNPA), le 2-(thiocyanométhylthio) benzothiazole (TCMTB), des pyrithiones telles que la pyrithione de zinc, le 2-bromo-2-nitropropane-1,3-diol (bronopol), et le 2,2-dibromo-3-nitrilopropionamide.

7. Une formulation selon les revendications 1 à 5 dans laquelle le biocide est le 3-iodo-2-propynyl butyl carbamate (IPBC), l'octylisothiazolinone (OIT), le 2-bromo-2-nitropropane-1,3-diol (bronopol), ou le 2,2-dibromo-3-nitrilopropionamide (DBNPA).

8. Une formulation selon les revendications 1 à 5 dans laquelle le biocide est un mélange de 3-iodo-2-propynyl butyl carbamate (IPBC) conjointement avec un élément ou plus parmi : l'octylisothiazolinone (OIT), la dichlorooctylisothiazolinone (DCOIT), le propiconazole, le cybutryne, ou la diiodométhyl-p-tolylsulfone (DIMTS).

9. Une méthode de fabrication de la formulation des revendications 1 à 8, la méthode comprenant :

l'ajout du biocide au polyglycol d'alkyle pour former un mélange, et

l'agitation du mélange de biocide et de polyglycol d'alkyle.

10. Une méthode d'inhibition de la croissance de micro-organismes dans un système à base d'eau, la méthode comprenant l'ajout audit système d'une quantité efficace d'une formulation selon n'importe laquelle des revendications 1 à 8.

11. Une méthode selon la revendication 10 dans laquelle le système à base d'eau est ou est utilisé avec des systèmes sélectionnés parmi des latex, des formulations de peinture, des revêtements, des suspensions épaisses minérales, des cosmétiques, des formulations de produits ménagers ou de soins personnels, des fluides d'usinage des métaux, des échantillons d'usine de pâte à papier et de papier, du bois, du cuir, des matériaux de construction, et le traitement

des eaux industrielles.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008013784 A